# EUROPEAN PATENT SPECIFICATION

(11) **EP 2 759 175 B1**
(45) Date of publication and mention of the grant of the patent: **25.07.2018**
(21) Application number: 12833095.8
(22) Date of filing: 20.09.2012
(51) Int. Cl.: H04W 56/00, H04W 36/00

(54) **METHOD AND APPARATUS FOR ACQUIRING SYNCHRONIZATION IN RADIO COMMUNICATION SYSTEM**
VERFAHREN UND VORRICHTUNG ZUR ERZIELUNG EINER SYNCHRONISATION IN EINEM FUNKKOMMUNIKATIONSSYSTEM
PROCÉDÉ ET APPAREIL PERMETTANT D'OBTENIR UNE SYNCHRONISATION DANS UN SYSTÈME DE RADIOCOMMUNICATION

(30) Priority: 21.09.2011 US 201161537553 P; 12.01.2012 US 201261586113 P
(43) Date of publication of application: 30.07.2014
(73) Proprietor: LG Electronics Inc., Seoul 150-721 (KR)
(72) Inventor: SEO, Inkwon, Anyang-si Gyeonggi-do 431-080 (KR); SEO, Hanbyul, Anyang-si Gyeonggi-do 431-080 (KR); KIM, Kijun, Anyang-si Gyeonggi-do 431-080 (KR); KIM, Hakseong, Anyang-si Gyeonggi-do 431-080 (KR)
(74) Representative: Frenkel, Matthias Alexander
(86) International application number: PCT/KR2012/007537
(87) International publication number: WO 2013/042954

(56) References cited:
- WO-A1-00/51393
- WO-A1-2008/110992
- WO-A1-2008/133579
- WO-A1-2008/143907
- WO-A1-2010/087172
- WO-A1-2011/043015
- US-A1- 2007 098 116
- US-A1- 2007 149 206
- US-A1- 2010 061 322

## Description

### [Technical Field]

The present invention relates to a radio communication system, and more particularly, to a method and apparatus for acquiring synchronization in a heterogeneous network environment.

### [Background Art]

A radio communication system has been widely developed to provide various kinds of communication services such as voice and data. Generally, the radio communication system is a multiple access system that may support communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

US 2010/061322 A1 describes a method of transmitting a forward synchronization signal in a wireless communication system, which includes each base station existing in the wireless communication system generating a frame according to a predetermined unit of frame timing by using a same external clock signal, and allocating different offsets to frames of adjacent base stations by using the external clock signal so that forward link common channels included in the frames do not overlap each other, and transmitting the frames.

### [Disclosure]

### [Technical Problem]

An object of the present invention devised to solve the problem lies on a user equipment for efficiently acquiring synchronization in an interference situation.

The objects of the present invention are not limited to the objects mentioned above, and other objects would be clearly understood by those skilled in the art from the disclosure below.

### [Technical Solution]

The invention is defined in the independent claims. Various improvements are recited in the dependent claims.

In an aspect of the present disclosure, provided herein is a method for acquiring synchronization by a user equipment (UE) in a radio communication system, the method including receiving a synchronization signal from a first transmission point, acquiring synchronization to a second transmission point using the received synchronization signal and information including a subframe offset received from a serving transmission point different from the first transmission point, wherein the subframe offset is a subframe difference value between the first transmission point and the second transmission point.

Here, acquiring synchronization to the second transmission point may include acquiring 5ms synchronization using a primary synchronization signal included in the synchronization signal of the first transmission point, and acquiring a frame timing using the subframe offset.

The synchronization signal may be a primary synchronization signal.

The synchronization signal may further include a secondary synchronization signal.

Subframe boundaries of the first transmission point and the second transmission point may be aligned.

Further, the information including the subframe offset may include information on whether the subframe boundaries of the first transmission point and the second transmission point are aligned.

The information including the subframe offset may be received in a process of the UE's initial access or handover to the first transmission point.

The information including the subframe offset may be included in information on each cell within a cell list.

The UE may acquire information about a cyclic prefix of the second transmission point from the fist transmission point.

The UE may assume that a length of the cyclic prefix of the second transmission point is the same as a length of a cyclic prefix of the first transmission point.

The transmission point may be a macro cell, and the second transmission point may be a pico cell.

In a further aspect of the present disclosure, provided herein is a user equipment (UE) in a radio communication system, the UE including a reception module, and a processor, wherein the processor receives a synchronization signal from a first transmission point and acquires synchronization to a second transmission point using the received synchronization signal and information including a subframe offset received from a serving transmission point different from the first transmission point, and the subframe offset is a subframe difference value between the first transmission point and the second transmission point.

In a further aspect of the present disclosure, provided herein is a first transmission point unit in a radio communication system, the first transmission point unit including a transmission module, and a processor, wherein the processor transmits information including a subframe offset and transmits a synchronization signal, wherein the synchronization signal and the information including the subframe offset are used in acquiring synchronization to a second transmission point of a user equipment (UE), wherein the subframe offset is a subframe difference value between the first transmission point and the second transmission point.

### [Advantageous Effects]

According to the present invention, a terminal may efficiently acquire synchronization in an interference situation.

The effects of the present invention are not limited to the effects mentioned above, and other effects would be clearly understood by those skilled in the art from the disclosure below.

### [Description of Drawings]

The accompanying drawings, which are included to provide a further understanding of the invention, illustrate embodiments of the invention and together with the description serve to explain the principle of the invention.

In the drawings:
FIG. 1 illustrates a structure of a radio frame;
FIG. 2 illustrates a resource grid in a downlink slot;
FIG. 3 illustrates a structure of a downlink subframe;
FIG. 4 illustrates a structure of an uplink subframe;
FIG. 5 illustrates a heterogeneous network;
FIG. 6 illustrates an absolute blank subframe (ABS);
FIG. 7 illustrates a handover procedure;
FIG. 8 illustrates determining whether to transmit a measurement report in a handover procedure;
FIG. 9 illustrates a random access procedure;
FIG. 10 illustrates a PSS/SSS in an FDD system;
FIG. 11 illustrates a heterogeneous network environment to which an exemplary embodiment of the present invention may be applied; and
FIG. 12 illustrates a structure of a transmission/reception unit.

### [Best Mode for Carrying Out the Invention]

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in
another embodiment and may be replaced with corresponding constructions of another embodiment.

In the embodiments of the present invention, a description is made, centering on a data transmission and reception relationship among a Base Station (BS) and a User Equipment (UE) . The BS is an end node of a network, which communicates directly with a terminal. In some cases, a specific operation described as performed by the BS may be performed by an upper node of the BS.

Namely, it is apparent that, in a network comprised of a plurality of network nodes including a BS, various operations performed for communication with a terminal may be performed by the BS, or network nodes other than the BS . The term 'BS' may be replaced with the terms 'fixed station', 'Node B', 'evolved Node B (eNode B or eNB)', 'Access Point (AP)', etc. The term "relay" may be used interchangeably with 'Relay Node (RN) ' , 'Relay Station (RS)', etc. The term 'terminal' may be replaced with the terms 'User Equipment (UE)', 'Mobile Station (MS)', 'Mobile Subscriber Station (MSS)', 'Subscriber Station (SS)', etc.

Specific terms used for the embodiments of the present invention are provided to aid in understanding of the present invention. These specific terms may be replaced with other terms within the scope of the present invention.

In some cases, to prevent the concept of the present invention from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

The embodiments of the present invention may be supported by standard documents disclosed for at least one of wireless access systems such as Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention may be supported by those documents. Further, all terms as set forth herein may be explained by the standard documents.

Techniques described herein may be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. UTRA is a part of Universal Mobile Telecommunication System (UMTS). 3GPP LTE is a part of Evolved-UMTS (E-UMTS) using E-UTRA. 3GPP LTE employs OFDMA for downlink and SC-FDMA for uplink. LTE-A is an evolution of 3GPP LTE. WiMAX may be described by the IEEE 802.16e standard (Wireless Metropolitan Area Network (WirelessMAN-OFDMA Reference System) and the IEEE 802.16m standard (WirelessMAN-OFDMA Advanced System). For clarity, this application focuses on the 3GPP LTE/LTE-A system. However, the technical features of the present invention are not limited thereto.

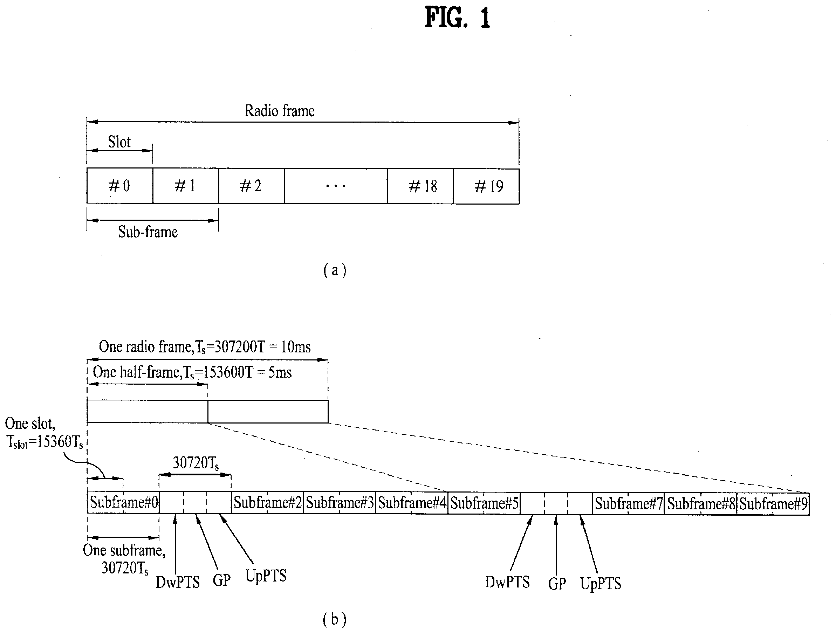

FIG. 1 illustrates the structure of a radio frame.

In a cellular OFDM radio packet communication system, uplink/downlink data packet transmission is performed in subframe units, and one subframe is defined as a certain time section including a multiple of OFDM symbols. 3GPP LTE supports a type 1 radio frame structure applicable to Frequency Division Duplex (FDD) and type 2 radio frame structure applicable to Time Division Duplex (TDD).

FIG. 1(a) illustrates the structure of a type 1 radio frame. A downlink radio frame includes 10 subframes, and one frame includes two slots in the time domain. Time required for transmission of one subframe is called Transmission Time Interval (TTI). For example, the length of one subframe may be 1ms and the length of one slot may be 0.5ms. One slot includes a plurality of OFDM symbols in the time domain, and includes a multiple of resource blocks (RB) in the frequency domain. In the 3GPP LTE system, OFDMA is used in downlink, and thus each OFDM symbol represents one symbol section. The OFDM symbol may also be called an SC-FDMA symbol or symbol section. The resource block (RB) is a resource allocation unit, and one slot may include a plurality of continuous subcarriers.

The number of OFDM symbols included in one slot may be dependent on the configuration of Cyclic Prefix (CP). A CP may be classified into an extended CP and a normal CP. For example, if the OFDM symbol is configured by a normal CP, the number of OFDM symbols included in one slot may be 7. If the OFDM symbol is configured by an extended CP, the length of one OFDM symbol is extended, and thus the number of OFDM symbols included in one slot is smaller than the number when configured by a normal CP. In the case of an extended CP, for example, the number of OFDM symbols included in one slot may be 6. If the channel state is unstable as in the case where a terminal moves fast, an extended CP may be used to further reduce interference between symbols.

If a normal CP is used, one slot includes 7 OFDM symbols, and thus one subframe includes 14 OFDM symbols. At this time, the first 2 or 3' OFDM symbols of each subframe may be allocated to a Physical Downlink Control CHannel (PDCCH), and the remaining symbols may be allocated to a Physical Downlink Shared CHannel (PDSCH).

FIG. 1(b) illustrates the structure of a type 2 radio frame. The type 2 radio frame includes two half frames, each half frame includes 5 subframes, Downlink Pilot Time Slot (DwPTS), Guard Period (GP) and Uplink Pilot Time slot (UpPTS). Here, one subframe includes two subframe. DwPTS is used in initial cell search, synchronization or channel estimation in a terminal. UpPTS is used in channel estimation in an eNB and upward transmission synchronization to a terminal. A guard period is a period for removing interference generated in the uplink due to multipath delay of the downlink signal between the uplink and the downlink. Further, one subframe includes two slots regardless of the type of the radio frame.

The structure of the radio frame described above is just an example, and the number of subframes included in the radio frame, the number of slots included in the subframe, and the number of symbols included in the slot may be changed in various manners.

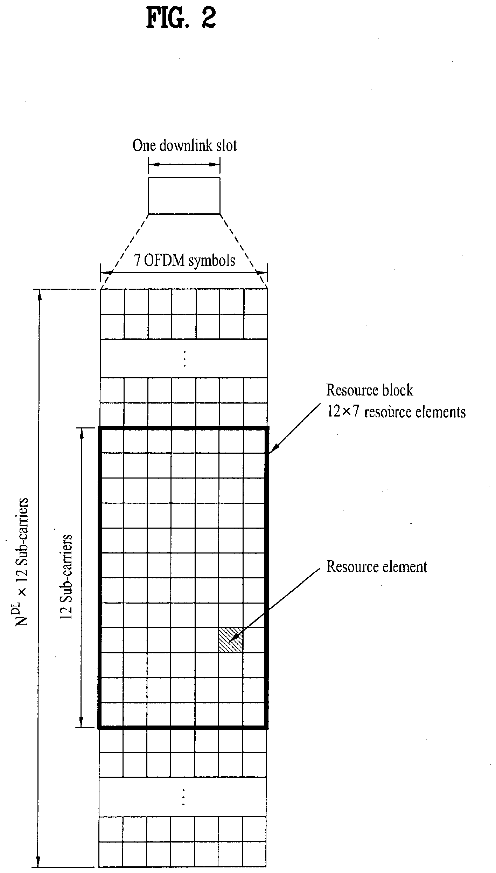

FIG. 2 illustrates a resource grid in a downlink slot. With reference to FIG. 2, one downlink slot includes seven OFDM symbols, and one resource block (RB) includes 12 subcarriers, but the present invention is not limited to this example. For example, in the case of a general Cyclic Prefix (CP), one slot includes 7 OFDM symbols, but in the case of an extended CP, one slot may include 6 OFDM symbols. Also, each element on the resource grid is called a resource element. One resource block includes 84 resource elements (12×7=84). N^{DL} is the number of resource blocks included in the downlink slot, and is dependent upon downlink transmission bandwidth. The structure of an uplink slot may be the same as that of the downlink slot.

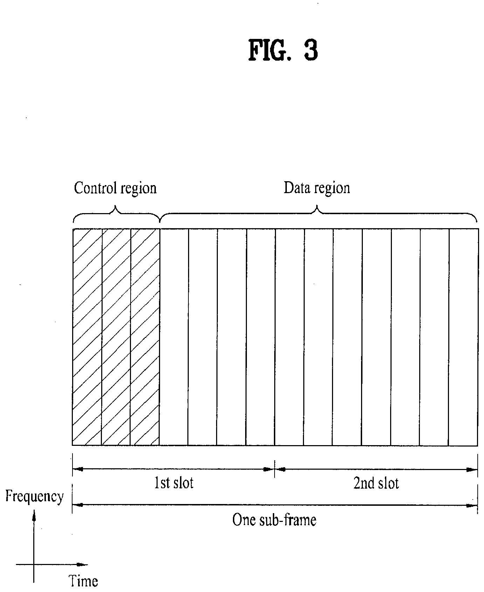

FIG. 3 illustrates the structure of a DL subframe. Referring to FIG. 3, a maximum of 3 (or 4) OFDM symbols at the front part of a first slot of a subframe corresponds to a control region to which control channels are allocated. The remaining OFDM symbols correspond to a data region to which a Physical Downlink Shared Channel (PDSCH) is allocated. Examples of DL control channels used in the 3GPP LTE system include, for example, a Physical Control Format Indicator Channel (PCFICH), a Physical Downlink Control Channel (PDCCH), a Physical Hybrid automatic repeat request Indicator Channel (PHICH), etc. The PCFICH is transmitted in the first OFDM symbol of a subframe and carries information about the number of OFDM symbols used for transmission of control channels in the subframe. The PHICH carries a Hybrid Automatic Repeat request (HARQ) Acknowledgment/Negative-Acknowledgment (ACK/NACK) signal as a response to UL transmission. Control information transmitted through the PDCCH is referred to as Downlink Control Information (DCI). The DCI includes resource allocation information for a User Equipment (UE) or a UE group and other control information. For example, the DCI includes UL/DL scheduling information, a UL transmit (Tx) power control command, etc. The PDCCH carries a transmission format and resource allocation information for a Downlink Shared Channel (DL-SCH), transmission format and resource allocation information for an Uplink Shared Channel (UL-SCH), paging information on a Paging Channel (PCH), system information on the DL-SCH, resource allocation information of a higher-layer control message such as a random access response transmitted on the PDSCH, a Tx power control command set for individual UEs in a UE group, a Tx power control command, activation indication information of Voice over IP (VoIP), and the like. A plurality of PDCCHs may be transmitted in the control region. A UE may monitor a plurality of PDCCHs. The PDCCH is transmitted on an aggregate of one or plural contiguous Control Channel Elements (CCEs). A CCE is a logical allocation unit used to provide the PDCCH with a coding rate based on a radio channel state. The CCE corresponds to a plurality of Resource Element Groups (REGs). A format of the PDCCH and the number of bits of the PDCCH are determined according to the number of CCEs. A Base Station (BS) determines a PDCCH format according to DCI to be transmitted to a UE and attaches a Cyclic Redundancy Check (CRC) to control information. An identifier (e.g. Radio Network Temporary Identifier (RNTI)) is masked to the CRC according to the owner or purposes of the PDCCH. For example, if the PDCCH is dedicated to a specific UE, an identifier of the UE (e.g. cell-RNTI (C-RNTI)) may be masked to the CRC. If the PDCCH is dedicated to a paging message, a paging identifier (e.g. paging-RNTI (P-RNTI)) may be masked to the CRC. If the PDCCH is for system information (more specifically, a System Information Block (SIB)), a System Information RNTI (SI-RNTI) may be masked to the CRC. If the PDCCH is for a random access response, a Random Access RNTI (RA-RNTI) may be masked to the CRC.

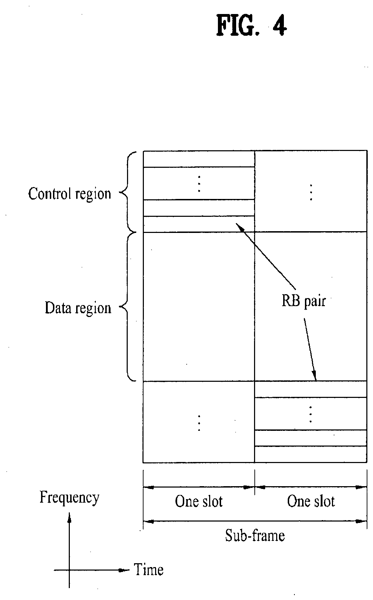

FIG. 4 illustrates the structure of an uplink subframe. The uplink subframe may be divided into a control region and a data region in the frequency domain. A Physical Uplink Control Channel (PUCCH) including uplink control information is allocated to the control region. In order to maintain the characteristics of a single carrier, one terminal does not simultaneously transmit a PUCCH and a PUSCH. The PUCCH for one terminal is allocated to a resource block pair in a subframe. Resource blocks, which belong to the resource block pair, occupy different subcarriers for two slots. In other words, a resource block pair allocated to the PUCCH is frequency-hopped in a slot boundary.

### Heterogeneous Deployments

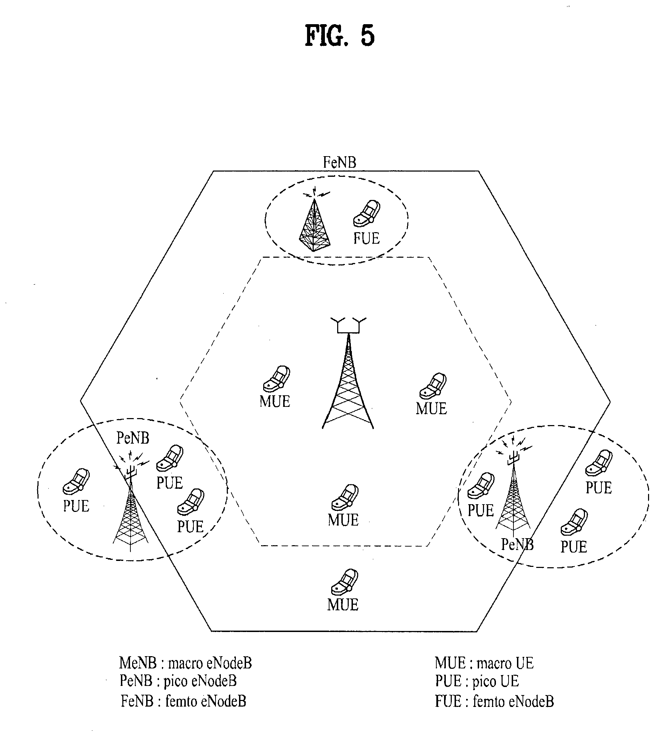

FIG. 5 illustrates a heterogeneous network radio communication system including a macro eNB (MeNB) and a micro eNB (PeNB or FeNB). In the present specification, the term "heterogeneous network" means a network in which a macro eNB and a micro eNB coexist even if the same radio access technology (RAT) is used.

The macro eNB (MeNB) has a wide coverage and high transmission power, and means a general eNB of a radio communication system. The macro eNB (MeNB) may also be referred to as a macro cell.

The micro eNB (PeNB or FeNB), for example, may also be referred to as a micro cell, a pico cell, a femto cell, a Home eNB (HeNB), and a relay, etc. (The micro eNB and the macro station may be commonly referred to as a transmission point.) The micro eNB is a small-sized version of the macro eNB, and may be independently operated while performing most functions of the macro eNB. The micro eNB may be overlaid within an area covered by the macro eNB or may be overlaid in a shading area which is not covered by the macro eNB. The micro eNB (PeNB or FeNB) has a narrow coverage and low transmission power and may accommodate fewer terminals compared with the macro eNB (MeNB).

A terminal may be directly served from a macro eNB (hereinafter, referred to as "macro-terminal"), a terminal may be served from a micro eNB (hereinafter, referred to as "micro-terminal"). In some cases, the terminal (PUE), which exists in the coverage of the micro eNB, may be served from the macro eNB.

The micro eNB may be classified into two types depending on whether terminal access is allowed.

A first type is Open access Subscriber Group (OSG) or non-Closed access subscriber Group (non-CSG) eNB, and is a cell which allows an access of the existing macro-terminal or a micro-terminal of another micro eNB. The existing macro-terminal, etc. may be handed over to an OSG-type eNB.

A second type, which is a CGS eNB, does not allow access of the existing macro-terminal or a micro-terminal of another micro eNB, and thus may not be handed over to a CGS eNB.

### Intercell Interference Coordination (ICIC)

In a heterogeneous environment as stated above, interference between neighboring cells may be a problem. In order to solve the problem of intercell interference, intercell interference coordination (ICIC) may be applied. The existing ICIC may be applied to frequency resources and time resources.

As an example of ICIC for frequency resources, in a 3GPP LTE release-8 system, a method of dividing a given entire frequency domain (e.g., a system bandwidth) into one or more sub-domains (e.g., a physical resource block (PRB) unit), and exchanging the ICIC message for each frequency sub-domain between cells, was defined. For example, as information included in the ICIC message for the frequency resource, Relative Narrowband Transmission Power (RNTP) related with the downlink transmission power was defined, UL Interference Overhead Indication (IOI) related with the uplink interference, and UL High Interference Indication (HIH) were defined.

RNTP is information indicating downlink transmission power used in a certain frequency sub-domain by a cell which transmits an ICIC message. For example, setting of the RNTP field on a certain frequency sub-domain to a first value (e.g., 0) may mean that the downlink transmission power of the cell does not exceed a preset threshold in the frequency sub-domain. Further, setting of the RNTP field on the frequency sub-domain to a second value (e.g., 1) may mean that the cell may not make a promise on the downlink transmission power in the frequency sub-domain. In other words, if the value of the RNTP field is 0, it is considered that the downlink transmission power of the cell would be low in the frequency sub-domain, but if the value of the RNTP field is 1, it may not be considered that the downlink transmission power of the cell would be low in the frequency sub-domain.

UL IOI is information indicating the amount of interference suffered (received) in a certain frequency sub-domain by a cell which transmits an ICIC message. For example, setting of the IOI field for a certain frequency sub-domain to a value corresponding to a large amount of interference may mean that the cell is receiving strong uplink interference in the frequency sub-domain. The cell, which has received the ICIC message, may schedule a terminal using low uplink transmission power among terminals served by the cell, in a frequency sub-domain corresponding to the IOI indicating strong uplink interference. As such, terminals perform uplink transmission with low transmission power in a frequency sub-domain corresponding to the IOI indicating strong uplink interference, and thus uplink interference received by neighboring cells (i.e., cells which transmitted the ICIC message) may be relieved.

UL HII is information indicating the level of interference which may be caused by uplink transmission in the cell, which transmits the ICIC message, for the frequency sub-domain (or uplink interference sensitivity). For example, setting of the HII field for a certain frequency sub-domain to a first value (e.g., 1) may mean that a cell, which transmits the ICIC message, may schedule a terminal having strong uplink transmission power for the frequency sub-domain. In contrast, setting of the HII field for a certain frequency sub-domain to a second value (e.g., 0) may mean that a cell, which transmits the ICIC message, may schedule a terminal having weak uplink transmission power for the frequency sub-domain. Further, the cell, which has received the ICIC message, may avoid interference from the cell, which has transmitted the ICIC message, by first scheduling the terminal in a frequency sub-domain where the HII has been set to the second value (e.g., 0), and scheduling terminals which may operate well even under strong interference in the frequency sub-domain where the HII has been set to the first value (e.g., 1).

Further, as an example of an ICIC for time resources, in a 3GPP LTE-A (or LTE release-10) system, a method of dividing a given entire time domain into one or more sub-domains (e.g., subframe units) on frequency, and exchanging information on whether each time sub-domain is silenced between cells, is defined. A cell, which transmits an ICIC message, may transmit information, which indicates performance of silencing on a certain subframe, to neighboring cells, and does not schedule PDSCH or PUSCH in the corresponding subframe. Further, a cell, which receives the ICIC message, may schedule uplink and/or downlink transmission on a terminal on a subframe where silencing is performed on a cell which has transmitted the ICIC.

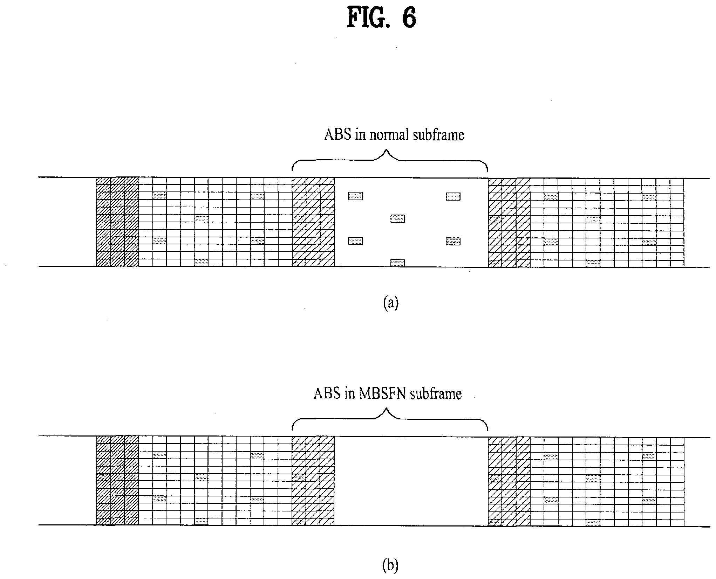

Silencing may mean an operation where a certain cell does not perform most of signal transmissions (or performs 0 or weak power transmission) on the uplink and downlink in a certain subframe. As an example of silencing, a certain cell may set a certain subframe to an Almost Blank Subframe (ABS). An ABS may be classified into two types as illustrated in FIG. 6. Specifically, as illustrated in FIG. 6(a), there may be a case where a cell-specific reference signal (CRS) is transmitted, but a data region is kept empty (ABS in a normal subframe), and a case where even the CRS is not transmitted (ABS in a MBSFN subframe). In the case of an ABS in a normal subframe, there may be an influence of interference by the CRS. Hence, the ABS in a MBSFN subframe is somewhat advantageous in terms of interference, but may be used in a limited way, and thus the two types of ABS may be used together.

### Handover

Hereinafter, handover and a random access process performed in an LTE system will be described.

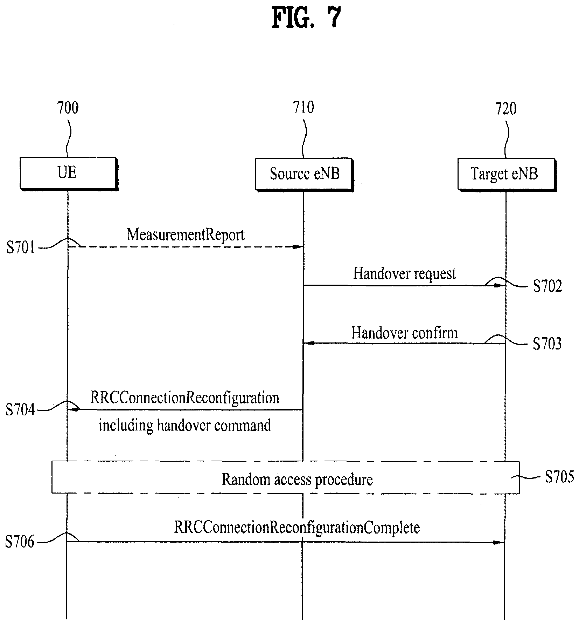

FIG. 7 illustrates a handover process. Referring to FIG. 7, a user equipment 700 monitors measured values from a currently connected serving eNB 710, and when a handover trigger occurs, the user equipment 700 transmits a measurement report to the serving eNB 710 (S701). Here, the measurement report may include reference signal received power (RSRP), received signal strength indicator (RSSI), reference signal received quality (RSRQ), etc.

The RSRP is a measured value which may be acquired by measuring the size of the CRS in downlink. The RSSI is the total received power value received by the terminal, and is a measured value including interference and noise power from neighboring cells. The RSRQ is a value measured in the form of N*RSRP/RSSI, and here, N is the number of RBs of the bandwidth when measuring the RSSI.

The transmission of the measurement report may be determined by the determination of the measurement report based on the following event.
i) In case the measured value on the serving cell becomes larger than the absolute threshold,
ii) In case the measured value on the serving cell becomes smaller than the absolute threshold,
iii) In case the measured value on the neighboring cell becomes larger than the measured value of the serving cell by an offset value,
iv) In case the measured value of the neighboring cell becomes larger than the absolute threshold, and
v) In case the measured value on the serving cell becomes smaller than the absolute threshold, and the measured value on the neighboring cell becomes larger than another absolute threshold.

Here, the measured value may be an RSRP, etc. mentioned above.

Further, the measurement report may be set to be transmitted only in case each condition of the above-described measurement report determination is maintained for a preset time which is set in the network.

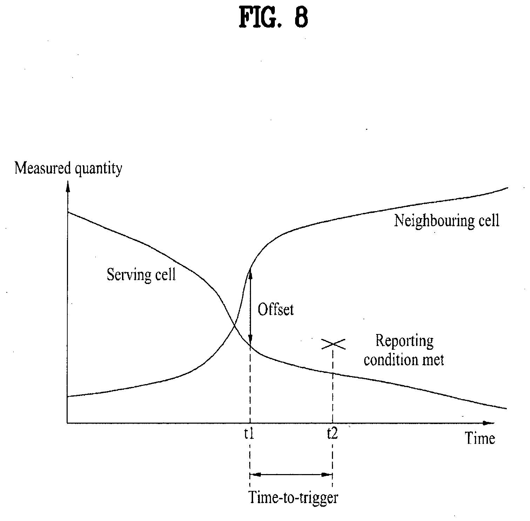

The above iii) may be specifically explained below with reference to FIG. 8. A terminal continually measures an RSRP, etc. for a serving cell and a neighboring cell. As the terminal approaches the neighboring cell, if a preset time (time to trigger) passes from t1 where the RSRP on the neighboring cell becomes larger than the RSRP of the serving cell by an offset (t2), the terminal may perform the measurement report to the serving cell. Here, the offset value and preset time, etc. may be set by the network.

Continually, the serving eNB 710, which has received the measurement report from the user equipment 700, transmits a handover request message to the target eNB 720 (S702). At this time, the serving eNB 710 provides radio resource control (RRC) context information of the terminal to the target eNB 720.

The target eNB 720 determines whether to perform handover of the terminal. If performance of handover is determined, the target eNB generates a handover command, and the serving eNB transmits an RRCConnectionReconfiguration message including the handover command to the user equipment 700 (S704). The RRC connection reconfiguration message may include wireless resource setting information, security information, cell identifier (C-RNTI), etc. which are commonly applied to terminals within the target eNB 720 area.

The user equipment (UE) 700, which has received the RRC connection reconfiguration message, starts a random access procedure to the target eNB 720 (S705). If the random access procedure is successfully completed, the UE terminates the handover procedure by transmitting an RRCConnectionReconfigurationComplete message to the target eNB 720 (S706).

In the above-mentioned handover procedure, the random access procedure will be specifically described below. In the LTE system, a UE may perform a random access procedure in the following cases.
- When a terminal has no RRC connection with an eNB and thus performs initial access
- When a terminal initially connects to a target cell in the handover procedure
- When requested by the command of an eNB
- When data to the uplink is generated in a situation where designated radio resources used to request radio resources have not been allocated, or uplink time is not synchronized
- In the restoration procedure at the time of radio link failure or handover failure

Based on the above, a general competition-based random access procedure will be described below.

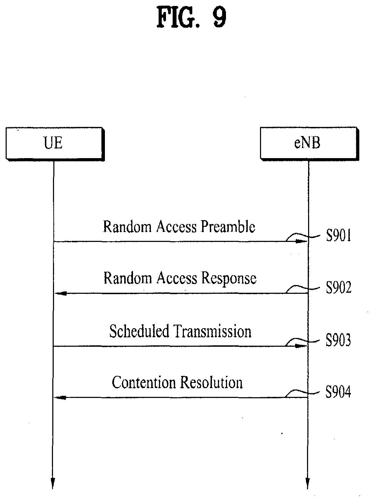

FIG. 9 illustrates an operation procedure of a terminal and an eNB in a competition-based random access procedure.

### (1) First message transmission

First, a terminal (UE) may select one random access preamble from a set of random access preambles instructed through a handover command or system information, and select a Physical RACH (PRACH) resource which may transmit the random access preamble, then transmit the selected random access preamble and PRACH resource (S901).

### (2) Second message reception

After transmitting a random access preamble, a UE attempts reception of a random access response of the terminal within the random access response reception window instructed by an eNB through system information or handover command (S902). More specifically, the random access response information may be transmitted in MAC PDU format, and the MAC PDU may be transmitted through a Physical Downlink Shared Channel (PDSCH). Further, in order for the UE to appropriately receive information transmitted to the PDSCH, it is desirable for the UE to monitor the Physical Downlink Control CHannel (PDCCH). That is, it is desirable that the PDCCH include information on a terminal, which should receive the PDSCH, frequency and time information of radio resources of the PDSCH, transmission format of the PDSCH, etc. Once the UE succeeds in receiving the PDCCH transmitted to the UE itself, the UE may appropriately receive a random access response transmitted to the PDSCH according to information of the PDCCH. Further, the random access response may include a random access preamble identifier, an uplink grant indicating uplink radio resources, a temporary cell identifier (Temporary C-RNTI), and a timing advance command (TAC), etc.

As described above, in a random access response, a random access preamble identifier is necessary because one random access response may include random access response information for one or more UEs, and thus it is necessary for information about, for which terminal the uplink grant, the temporary cell identifier and the TAC are valid, to be notified. Here, it is assumed that the UE selects a random access preamble identifier which coincides with the random access preamble selected by the UE itself at step S902. As such, the UE may receive a UL grant, a temporary C-RNTI, a timing advance command (TAC), etc.

### (3) Third message transmission

In case a UE receives a random access response which is valid for the UE itself, the UE respectively processes information sets included in the random access response. That is, the UE applies the TAC, and stores a temporary cell identifier. Further, in response to the valid random access response reception, the UE may store data to be transmitted in message 3 buffer.

Further, the UE transmits data (e.g., the third message) to the eNB using the received UL grant (S903). The third message should include the identifier of the UE. In the competition-based random access procedure, it is not possible to determine which terminals perform the random access procedure in the eNB because the UE should be identified to resolve future contention.

Methods for including the identifier of the UE have been discussed. According to the first method, if a UE has a valid cell identifier, which has already been allocated prior to the random access procedure, the UE transmits its cell identifier through an uplink transmission signal corresponding to the UL grant. In contrast, if a valid cell identifier has not been allocated prior to the random access procedure, the UE performs transmission including its unique identifier (e.g., a S-TMSI or a random ID). Generally, the unique identifier is longer than the cell identifier. If data corresponding to the UL has been transmitted, the UE initiates a contention resolution timer (CR timer).

### (4) Fourth message reception

After a UE transmits data including its identifier through the UL grant included in the random access response, the UE awaits an instruction of the eNB for contention resolution. That is, the UE attempts reception of a PDCCH in order to receive a certain message (S904). Two methods have been discussed in the method of receiving the PDCCH, too. As mentioned above, if the third message transmitted according to the UL grant is transmitted using the cell identifier, the UE may attempt reception of the PDCCH using its cell identifier, and in case the identifier is a unique identifier, the UE may attempt reception of the PDCCH using a random cell identifier included in the random access response. Thereafter, in the former case, if a PDCCH is received through the cell identifier of the UE before the contention resolution timer expires, the UE determines that the random access procedure has been normally performed, and the random access procedure is terminated. In the latter case, if the PDCCH has been received through a random cell identifier before the contention resolution timer expires, the UE checks data transmitted by the PDSCH instructed by the PDCCH. If the data includes the unique UE identifier, the UE determines that the random access procedure has been normally performed, and terminates the random access procedure.

Further, with respect to the operation in the non-competition-based random access procedure, unlike the competition-based random access procedure illustrated in FIG. 9, the random access procedure is terminated only by the first message transmission and the second message transmission. However, the UE is allocated a random access preamble from the eNB before the UE transmits the random access preamble as the first message, and the UE transmits the allocated random access preamble to the eNB as the first message and the random access procedure is terminated as the UE receives a random access response from the eNB.

### Cell Range Extension (CRE)

Cell Range Extension (CRE) means that, in a heterogeneous network environment as described above, terminals, which are located close to a micro eNB (e.g., PeNB, etc.) and thus are interfered by the micro eNB, among terminals (MUEs) connected to the macro eNB (e.g., MeNB), perform a handover to the micro eNB. Through such cell range extension, influence of existing interference may be reduced, and load balancing may be achieved.

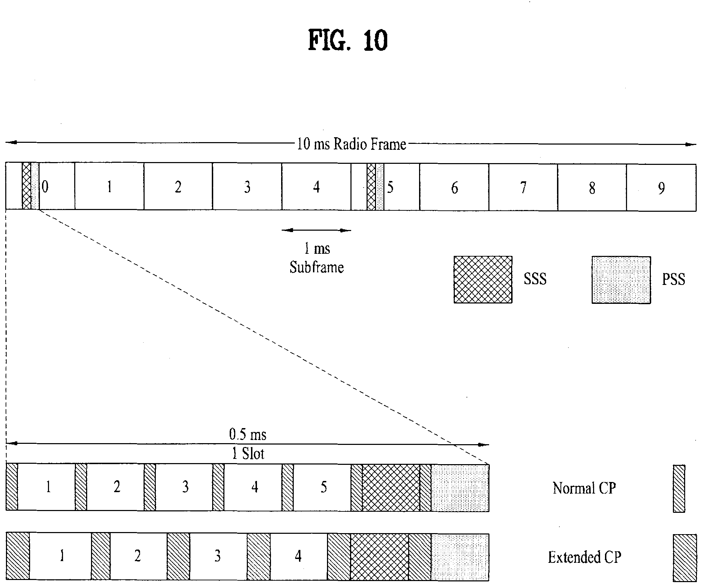

In a heterogeneous network environment, it is probable that the RSRP for the macro eNB is larger than the RSRP for the micro eNB because the micro eNB generally performs transmission with low power. Hence, when the UE performs CRE, the above iii) among the determination criteria, i.e., the case where the measured value on the neighboring cell becomes larger than the measured value of the serving cell by an offset value, may be applied. FIG. 10 illustrates a heterogeneous network environment to which such a determination criterion has been applied. In FIG. 10, a UE, which belongs to the shading portion, satisfies the measurement report transmission determination standard, and thus the handover procedure may be started by transmitting the measurement report to the macro eNB, which is the serving eNB.

### Primary Synchronous Signal (PSS) / Secondary Synchronous Signal (SSS)

FIG. 10 illustrates a primary synchronous signal (PSS) and a secondary synchronous signal (SSS) used in cell search in an LTE/LTE-A system. Cell search will be described below before explaining about the PSS and SSS. Cell search may be performed if a UE connects to a cell for the first time, if handover is performed from the currently connected cell to another cell, or if a cell is reselected, and may be performed by acquisition of the frequency and symbol synchronization to the cell, acquisition of downlink frame synchronization to the cell and determination of the cell identifier. Three cell identifiers form one cell group, and there may be 168 cell groups.

A PSS and an SSS are transmitted in an eNB for a cell search. The UE may acquire the 5ms timing of the cell by detecting the PSS, and understand the cell identifier within the cell group. Further, the UE may recognize the radio frame timing and cell group by detecting the SSS.

Referring to FIG. 10, a PSS is transmitted in subframe no. 0 and subframe no. 5, and specifically, the PSS is transmitted to the last OFDM symbol of the first slot in subframe no. 0 and subframe no. 5. Further, an SSS is transmitted to the second OFDM symbol from the last symbol of the first slot of subframe no. 0 and subframe no. 5. That is, the SSS is transmitted in the OFDM symbol immediately prior to transmission of the PSS. Such a transmission timing is the case of FDD, and in the case of a TDD, the PSS is transmitted in the third symbol of subframe nos. 1 and 6, i.e., DwPTS, and the SSS is transmitted in the last symbol of subframe nos. 0 and 5. That is, in the TDD, the SSS is transmitted in a symbol which is three symbols ahead of the symbol where the PSS is transmitted.

The PSS is a Zadoff-Chu sequence having a length of 63, and in actual transmission, 0 is padded to both ends of the sequence, and the sequence is transmitted on 73 subcarriers (72 subcarriers if DC subcarrier is exempted, i.e., 6RB) in the middle of the system frequency bandwidth. The SSS consists of a sequence having a length of 62, which is formed by frequency interleaving two sequences having a length of 31, and is transmitted on 72 subcarriers in the middle of the entire system bandwidth as in the PSS.

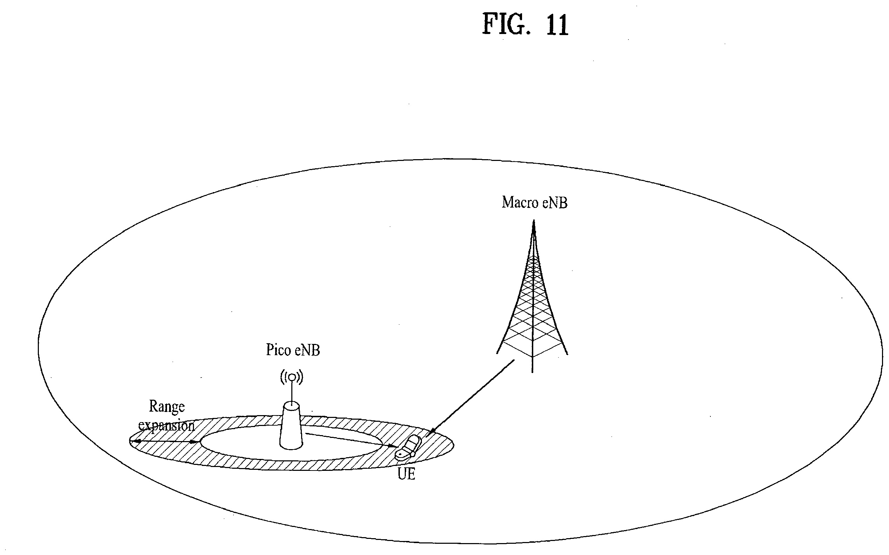

As described above, in an LTE/LTE-A system, a UE may acquire downlink synchronization using a PSS/SSS. However, in a heterogeneous environment, in case a signal from one transmission point causes substantial interference on another transmission point, the UE may have difficulty in acquiring synchronization by receiving the PSS/SSS of another transmission point. Specifically, in a situation as shown in FIG. 11, when a UE receives a PSS/SSS from the second transmission point to acquire synchronization to the second transmission point (Pico eNB), a high signal intensity from the first transmission point (macro eNB) may act as large interference (The first transmission point may be understood as an aggressor cell, the second transmission point may be understood as a victim cell, and the UE may be understood as a victim UE).

Hence, in the present invention, in a heterogeneous network environment as shown in FIG. 11, it is suggested that, when acquiring synchronization to the second transmission point, a UE uses information including a synchronization signal (a PSS and/or a SSS) and a subframe offset which are received from the first transmission point. That is, it is suggested to use a PSS and/or a SSS and a subframe offset of the first transmission point with relatively high signal intensity instead of acquiring a synchronization using the PSS/SSS of the second transmission point which is difficult to receive due to interference. Here, the subframe offset may have been received from the first transmission point, or may have already been known by the UE. The subframe boundaries of the first transmission point and the second transmission point may coincide with each other as a premise. However, the present invention may be applied even in the case in which the subframe boundaries of the first transmission point and the second transmission point do not coincide with each other, and in such a case, if information on whether the subframe boundaries coincide with each other, and/or information on such a difference in case the subframe boundaries do not coincide with each other, may be further received from the first transmission point.

In order for the UE to acquire synchronization to the second transmission point, it is possible to use both a PSS and an SSS received from the first transmission point, or it is possible to use a PSS only. Specifically, after acquiring synchronization to the first transmission point using both the PSS and the SSS received from the first transmission point, under the assumption that the subframe boundaries of the first transmission point and the second transmission point coincide with each other, the UE may finally acquire synchronization to the second transmission point using the subframe offset which has been signaled from the first transmission point or has already been known by the UE. Further, the terminal may acquire 5ms timing of the first transmission point by receiving a PSS from the first transmission point, and acquire frame timing using the subframe offset. That is the UE acquires the 5ms timing because the period of PSS transmission is 5ms.And, a frame timing, which is acquired by receiving and processing a SSS, is acquired from the subframe offset, and thereby complexity of SSS detection may be reduced. However, in such a case, information on the length of the cyclic prefix (CP), which may be understood through the SSS, may be signaled from the first transmission point, and this will be described later.

Hereinafter, specific application in each situation, where a UE acquires synchronization according to the present invention, will be described. In the description below, a synchronization signal may be understood as including both a PSS and an SSS, or including a PSS only.

Referring to FIG. 11, a UE, which is located in an extended area of the second transmission point, may be turned on, and connect to the system for the first time. At this time, in the extended area, the signal intensity from the first transmission point (macro eNB) may be higher than that of the second transmission point (pico eNB), and thus the UE may perform initial access to the first transmission point, and thereafter, the first transmission point may order the UE to be handed over to the second transmission point. At the time of such handover command, information including the subframe offset of the first transmission point and the second transmission point may be transmitted to the UE. For example, the first transmission point may add information including the subframe offset in RRCConnectionReconfiguration message or handover message, and then transmit the information. The UE may acquire synchronization to the second transmission point using the subframe offset received from the first transmission point and the synchronization signal transmitted from the first transmission point instead of a PSS/SSS transmitted from the second transmission point.

Referring to FIG. 11, if a UE, which has been located in an extended area of the second transmission point and has been connected to the second transmission point, loses connection, the UE re-performs the initial synchronization process for the second transmission point. As mentioned above, the signal intensity from the first transmission point would be higher to the UE located in the extended area, and thus the UE may use the synchronization signal and subframe offset transmitted from the first transmission point when performing synchronization to the second transmission point. In such a case, synchronization using a PSS/SSS transmitted from the second transmission point becomes unnecessary.

Here, the subframe offset, which has been received from the first transmission point at the time of initial access to the first transmission point or when a handover from the first transmission point to the second transmission point is performed, may be used. Here, in the case of a UE located in an extended area, in most cases, the UE would connect to the first transmission point with relatively high signal intensity, and then connect to the second transmission point according to the handover command, and thus the subframe offset, which has been received during the handover process (e.g., which has been included in an RRC connection reconfiguration message transmitted with the handover command), is used. Further, information at the time of handover from the first transmission point to the second transmission point (e.g., the RSRP of the first transmission point and the second transmission point, etc.) may be reused in this process.

That is, when the UE, which is located in the extended area, attempts initial access to the second transmission point by dropping the connection with the second transmission point, if the surrounding circumstance (e.g., the RSRP, etc. of the first transmission point and the second transmission point) is similar to the surrounding circumstance at the time of the previous handover, the information at the time of the handover may be used. In other words, if a certain UE has acquired synchronization to the second transmission point using the synchronization signal and subframe offset of the first transmission point in the process of handing over to the second transmission point after connecting to the first transmission point, if the UE loses the connection and connects to the second transmission point, the UE may be set to perform synchronization with the second transmission point using the synchronization signal and subframe offset of the first transmission point as in the previous case.

As another situation, even if a UE, which is located in the area of the transmission point, or a UE (not shown), which belongs to a transmission point adjacent to the second transmission point (e.g., a third transmission point), performs neighboring cell measurement for the second transmission point, it is possible to use the synchronization and subframe offset of the first transmission point with relatively high signal intensity. To this end, a UE may be signaled a serving cell and the subframe offset of the second transmission point from the currently connected transmission point (or if the current serving cell is the third transmission point, the subframe offset of the first transmission point and the second transmission point). Further, the information on whether the subframe boundaries of the serving cell and the second transmission point (or the subframe boundaries of the first transmission point and the second transmission point) coincide with each other may be additionally signaled.

In the example above, the subframe offset may be acquired from each set of cell information of the cell list which should be measured by the UE. Specifically, the cell list may include the subframe offset of the serving cell and a neighboring cell and/or information on whether the subframe boundaries of the serving cell and the neighboring cell coincide with each other. Further, in case there is a macro cell including a pico cell among neighboring cells, the cell list may include the subframe offset of the macro cell and the pico cell and/or information on whether the subframe boundaries of the macro cell and the pico cell coincide with each other. In other words, if there is a pair of pico cells, which are subjected to the interference of the macro cell, in the neighboring cell list, as in the situation of FIG. 11, the relation may be clearly stated in the neighboring cell list, and the subframe offset of the pair and/or the information whether the subframe boundaries coincide with each other may be included in the neighboring cell list. That is, information on the cell pair, which performs an eICIC, among neighboring cells may be signaled to the UE.

Further, as mentioned above, in a method of acquiring synchronization to the second transmission point with a PSS except an SSS among synchronization signals, and a subframe offset, it is difficult for the UE to obtain the information on the CP length of the second transmission point, and thus this difficulty should be taken into consideration. Hence, in the present invention, a UE may acquire information on the CP length of the second transmission point from the first transmission point. Further, the UE may be set to assume that the CP length of the transmission point is the same as that of the first transmission point. Here, the assumption that the CP lengths of the first transmission point and the second transmission point may be applied when limited to two cells that perform the eICIC, and may be applied when used in synchronization to the victim cell by detecting the PSS/SSS, etc. of the aggressor cell. Additionally, the assumption may also be applied in a limited manner in a certain operation as described below. Specifically, for example, the case, in which some resources suffering interference of a certain signal are set to perform transmitter-side rate matching or use receiver-side puncturing to minimize interference on the certain signal, may correspond to such a certain operation. Further, the case, in which an interference cancellation receiver is used to remove the interference between cells, may correspond thereto. This is because, even in the case of an interference cancellation receiver, which performs an operation of detecting the signal of the transmission point intending to receive the signal after detecting and removing the interference signal in the frequency domain after Fast Fourier Transform (FFT) of all signals including the interference signal, the assumption may be applied only when the CP lengths of transmission points are the same, and thereby the OFDM symbol boundaries coincide with each other. However, in the case of interference cancellation in the time domain, i.e., interference cancellation which removes the time domain waveform from the entire received signals by generating the time domain waveform of the interference signal through the Inverse FFT (IFFT) after performing the FFT for the interference signal and reproducing the interference signal, the CP lengths do not need to coincide with each other. Hence, even in the case where the interference cancellation receiver is used, the network may inform the UE of such information through the initial access process depending on whether frequency domain interference detection/removal is used, or time domain interference detection/removal is used.

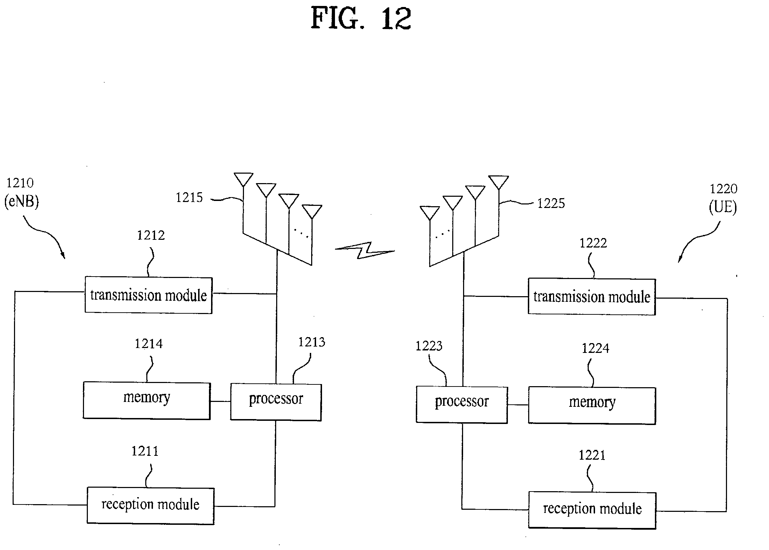

FIG. 12 illustrates the configuration of a transmission point unit (eNB) and a UE.

Referring to FIG. 12, the eNB 1210 according to the present invention may include a reception module 1211, a transmission module 1212, a processor 1213, a memory 1214 and a plurality of antennas 1215. The plurality of antennas 1215 means the transmission point unit (eNB) which supports MIMO transmission and reception. The reception module 1211 may receive various signals, data and information in uplink from the UE. The transmission module 1212 may transmit various signals, data and information in the downlink to the UE. The processor 1213 may control overall operation of the eNB 1210.

The processor 1213 of the eNB 1210 according to an embodiment of the present invention may be set so that the above-described embodiments may be operated, and additionally performs the function of operation-processing information received by the eNB 1210 and information to be transmitted to the outside, etc. The memory 1214 may store operation-processed information, etc. for preset time, and may be substituted by a component such as a buffer (not shown).

Continually referring to FIG. 12, the UE 1220 according to the present invention may include a reception module 1221, a transmission module 1222, a processor 1223, a memory 1224 and a plurality of antennas 1225. The plurality of antennas 1225 means a UE which supports the MIMO transmission and reception. The reception module 1221 may receive various signals, data and information in downlink from the eNB. The transmission module 1222 may transmit various signals, data and information in uplink to the eNB. The processor 1223 may control overall operation of the UE 1220.

The processor 1223 of the UE 1220 according to an embodiment of the present invention may be operated so that the above embodiments may be applied, and additionally perform the function of operation-processing information received by the UE 1220 and information to be transmitted to the outside, etc. The memory 1224 may store operation-processed information, etc. for a preset time, and may be replaced by a component such as a buffer (not shown).

The specific configuration of the above eNB and UE may be implemented so that the points described in the above described various embodiments of the present invention may be independently applied or two or more embodiments may be applied at the same time, and the description on redundant points is omitted herein for clarity.

Further, with respect to the description of FIG. 12, the description on the eNB 1210 may also be applied to the relay unit as the downlink transmission unit or the uplink reception unit in the same manner, and the description of the UE 1220 may also be applied to the relay unit as the downlink reception unit or the uplink transmission unit in the same manner.

Exemplary embodiments of the present invention may be implemented through various units. For example, the exemplary embodiments of the present invention may be implemented by hardware, firmware, software, a combination thereof, or the like.

In case of hardware implementation, a method according to the exemplary embodiments of the present invention may be implemented by one or more application specific integrated circuits (ASICs), digital signal processors (DPSs), digital
signal processing devices (DSPDs), programmable logic devices (PLDs), field programmable gate arrays (FPGAs), processors, controllers, microcontrollers, microprocessors, or the like.

In case of firmware or software implementation, the method according to the exemplary embodiment of the present invention may be implemented by a type such as a module, a procedure, or a function, or the like, which performs the above-mentioned functions or operations. Software code may be stored in a memory unit and may be driven by a processor. The memory unit is disposed inside or outside the processor to transmit and receive data to and from the processor by various known units.

Those skilled in the art will appreciate that the present invention may be carried out in other specific ways than those set forth herein without departing from essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an exemplary embodiment of
the present invention or included as a new claim by a subsequent amendment after the application is filed.

### [Mode for Invention]

Various embodiments have been described in the best mode for carrying out the invention.

### [Industrial Applicability]

The above described embodiments of the present invention may be applied to various mobile communication systems.

## Claims

1. A method for acquiring synchronization by a user equipment (1220), UE, in a radio communication system, the method comprising:
receiving a synchronization signal from a first transmission point; and
acquiring synchronization to a second transmission point using the received synchronization signal and information including a subframe offset received from a serving transmission point different from the first transmission point,
wherein the subframe offset is a subframe difference value between the first transmission point and the second transmission point.

2. The method according to claim 1, wherein acquiring synchronization to the second transmission point comprises:
acquiring 5ms synchronization using a primary synchronization signal included in the synchronization signal to the first transmission point; and
acquiring a frame timing using the subframe offset.

3. The method according to claim 1, wherein the synchronization signal is a primary synchronization signal.

4. The method according to claim 3, wherein the synchronization signal further includes a secondary synchronization signal.

5. The method according to claim 1, wherein subframe boundaries of the first transmission point and the second transmission point are aligned.

6. The method according to claim 1, wherein the information including the subframe offset includes information on whether the subframe boundaries of the first transmission point and the second transmission point are aligned.

7. The method according to claim 1, wherein the information including the subframe offset is received in a process of the UE's initial access or handover to the second transmission point.

8. The method according to claim 1, wherein the information including the subframe offset is included in information on each cell within a cell list.

9. The method according to claim 1, wherein the UE acquires information about a cyclic prefix of the second transmission point from the fist transmission point.

10. The method according to claim 1, wherein the UE assumes that a length of the cyclic prefix of the second transmission point is the same as a length of a cyclic prefix of the first transmission point.

11. The method according to claim 1, wherein the transmission point is a macro cell, and the second transmission point is a pico cell.

12. A user equipment (1220),UE, in a radio communication system, the UE comprising:
a reception module (1221); and
a processor (1223), wherein the processor is adapted to receive a synchronization signal from a first transmission point and acquire synchronization to a second transmission point using the received synchronization signal and information including a subframe offset received from a serving transmission point different from the first transmission point, wherein the subframe offset is a subframe difference value between the first transmission point and the second transmission point.

## Patentansprüche

1. Verfahren zur Erzielung einer Synchronisation durch ein Nutzerendgerät (1220), UE, in einem Funkkommunikationssystem, wobei das Verfahren umfasst:
Empfangen eines Synchronisationssignals von einem ersten Sendepunkt; und
Erzielen einer Synchronisation mit einem zweiten Sendepunkt unter Verwendung des empfangenden Synchronisationssignals und Information, die einen Teilrahmenversatz umfasst, der von einem anderen Liefersendepunkt empfangen wird als dem ersten Sendepunkt,
wobei der Teilrahmenversatz ein Teilrahmendifferenzwert zwischen dem ersten Sendepunkt und dem zweiten Sendepunkt ist.

2. Verfahren nach Anspruch 1, wobei das Erzielen der Synchronisation mit dem zweiten Sendepunkt umfasst:
Erzielen einer-5ms Synchronisation unter Verwendung eines primären Synchronisationssignals, das in dem Synchronisationssignal an den ersten Sendepunkt enthalten ist; und
Erzielen einer Rahmenzeitsteuerung unter Verwendung des Teilrahmenversatzes.

3. Verfahren nach Anspruch 1, wobei das Synchronisationssignal ein primäres Synchronisationssignal ist.

4. Verfahren nach Anspruch 3, wobei das Synchronisationssignal ferner ein sekundäres Synchronisationssignal umfasst.

5. Verfahren nach Anspruch 1, wobei Teilrahmengrenzen des ersten Sendepunkts und des zweiten Sendepunkts in Ausrichtung miteinander sind.

6. Verfahren nach Anspruch 1, wobei die Information, die den Teilrahmenversatz umfasst, Information darüber umfasst, ob die Teilrahmengrenzen des ersten Sendepunkts und des zweiten Sendepunkts miteinander in Ausrichtung sind.

7. Verfahren nach Anspruch 1, wobei die Information, die den Teilrahmenversatz umfasst, in einem Prozess des ursprünglichen Zugriffs des Nutzerendgerätes oder der Übergabe an den zweiten Sendepunkt empfangen wird.

8. Verfahren nach Anspruch 1, wobei die Information, die den Teilrahmenversatz umfasst, in der Information über jede Zelle in einer Zellenliste enthalten ist.

9. Verfahren nach Anspruch 1, wobei das UE Information über ein zyklisches Präfix des zweiten Sendepunkts von dem ersten Sendepunkt erlangt.

10. Verfahren nach Anspruch 1, wobei das UE annimmt, dass eine Länge des zyklischen Präfixes des zweiten Sendepunkts die gleiche ist wie eine Länge eines zyklischen Präfixes des ersten Sendepunkts.

11. Verfahren nach Anspruch 1, wobei der Sendepunkt eine Makrozelle ist und der zweite Sendepunkt eine Pikozelle ist.

12. Nutzerendgerät (1220), UE, in einem Funkkommunikationssystem, wobei das UE umfasst:
ein Empfangsmodul (1221); und
einen Prozessor (1223),
wobei der Prozessor dafür ausgebildet ist, ein Synchronisationssignal von einem ersten Sendepunkt zu empfangen und eine Synchronisation mit einem zweiten Sendepunkt unter Verwendung des empfangenen Synchronisationssignals und Information zu erlangen, die einen Teilrahmenversatz umfasst, der von einem anderen Liefersendepunkt empfangen wird als dem ersten Sendepunkt, wobei der Teilrahmenversatz ein Teilrahmendifferenzwert zwischen dem ersten Sendepunkt und dem zweiten Sendepunkt ist.

## Revendications

1. Procédé pour acquérir une synchronisation par un équipement utilisateur, UE, (1220) dans un système de radiocommunication, le procédé comprenant :
recevoir un signal de synchronisation à partir d'un premier point d'émission ; et
acquérir une synchronisation avec un second point d'émission à l'aide du signal de synchronisation reçu et d'informations comprenant un décalage de sous-trame reçues à partir d'un point d'émission de desserte différent du premier point d'émission,
le décalage de sous-trame étant une valeur de différence de sous-trame entre le premier point d'émission et le second point d'émission.

2. Procédé selon la revendication 1, dans lequel l'acquisition d'une synchronisation avec le second point d'émission comprend :
acquérir une synchronisation de 5 ms à l'aide d'un signal de synchronisation primaire inclus dans le signal de synchronisation sur le premier point d'émission ; et
acquérir une temporisation de trame à l'aide du décalage de sous-trame.

3. Procédé selon la revendication 1, dans lequel le signal de synchronisation est un signal de synchronisation primaire.

4. Procédé selon la revendication 3, dans lequel le signal de synchronisation comprend en outre un signal de synchronisation secondaire.

5. Procédé selon la revendication 1, dans lequel des limites de sous-trame du premier point d'émission et du second point d'émission sont alignées.

6. Procédé selon la revendication 1, dans lequel les informations comprenant le décalage de sous-trame comprennent des informations quant au point de savoir si les limites de sous-trame du premier point d'émission et du second point d'émission sont ou non alignées.

7. Procédé selon la revendication 1, dans lequel les informations comprenant le décalage de sous-trame sont reçues dans un processus d'accès ou de transfert intercellulaire initial de l'UE au second point d'émission.

8. Procédé selon la revendication 1, dans lequel les informations comprenant le décalage de sous-trame sont incluses dans des informations sur chaque cellule dans une liste de cellules.

9. Procédé selon la revendication 1, dans lequel l'UE acquiert des informations concernant un préfixe cyclique du second point d'émission à partir du premier point d'émission.

10. Procédé selon la revendication 1, dans lequel l'UE suppose qu'une longueur du préfixe cyclique du second point d'émission est la même qu'une longueur d'un préfixe cyclique du premier point d'émission.

11. Procédé selon la revendication 1, dans lequel le point d'émission est une macro-cellule, et le second point d'émission est une pico-cellule.

12. Équipement utilisateur, UE, (1220) dans un système de radiocommunication, l'UE comprenant :
un module de réception (1221) ; et
un processeur (1223),
le processeur étant conçu pour recevoir un signal de synchronisation à partir d'un premier point d'émission et acquérir une synchronisation avec un second point d'émission à l'aide du signal de synchronisation reçu et d'informations comprenant un décalage de sous-trame reçues à partir d'un point d'émission de desserte différent du premier point d'émission, le décalage de sous-trame étant une valeur de différence de sous-trame entre le premier point d'émission et le second point d'émission.
